# EUROPEAN PATENT APPLICATION

(11) **EP 2 762 255 A1**
(43) Date of publication of application: **06.08.2014**
(21) Application number: 13000580.4
(22) Date of filing: 05.02.2013
(51) Int. Cl.: B23D 61/12

(54) **Double-sided reciprocating saw blade and related method**

(71) Applicant: Irwin Industrial Tool Company, Huntersville, NC 28078 (US)
(72) Inventor: Elliston, Asif, Springfield, MA 01104 (US); Kalomeris, Charles E., East Longmeadow, MA 01028 (US)
(74) Representative: Schmid, Nils T.F.

(57) **Abstract**

A reciprocating saw blade (20; 120) has a blade body (22; 122) defining a first end and a second end. A first cutting edge (28; 128) is located on one side of the blade body, and a second cutting edge (30; 130) located on an opposite side of the blade body. A first tang (24; 124) is located at one end of the blade body and defines a first acute cutting angle of the first cutting edge (28; 128). A second tang (26) may be located at another end of the blade body (22) and defines a second acute cutting angle of the second cutting edge (30). The first (24; 124) and second (26) tangs are alternately and releasably engageable by the chuck of the reciprocating saw. At least one cutting edge (128, 130) may be defined by a plurality of groups of cutting elements (136, 138). Each group of cutting elements (136, 138) is oriented at a respective acute cutting angle relative to a tang edge (124) that defines an effective cutting angle for the respective group of cutting elements (136, 138).

## Description

### FIELD OF THE INVENTION

The present invention relates to saw blades, and more particularly, to reciprocating saw blades having cutting edges on both sides and to related methods of use.

### BACKGROUND

Typical prior art reciprocating saw blades include a blade portion having a cutting edge defined by a plurality of teeth axially spaced relative to each other along one side of the blade, and a non-working edge formed on an opposite side of the blade relative to the cutting edge. The inner ends of such reciprocating saw blades define tangs for releasably connecting the blades to chucks of reciprocating saws. The outer ends of reciprocating saw blades do not define tangs and are not connectable to chucks of reciprocating saws. Rather, the outer ends of reciprocating saw blades define free ends and the cutting edges of such saw blades extend to the distal tips of the free ends.

A reciprocating saw machine is a hand-held power saw including a chuck that releasably engages only one end of the reciprocating saw blade (i.e., the tang on the inner end of the saw blade) and drives the inner end and thus the saw blade in a reciprocating motion through a work piece. Reciprocating saw machines are typically driven by electric motors (e.g., cord or cordless saws), or are pneumatically driven. The reciprocating motion can be an orbital cutting action, a straight or linear cutting action, or an angled cutting action. Reciprocating saws are sometimes referred to as recip saws, or jig saws, and reciprocating saw blades are sometimes referred to as recip blades or jig saw blades. A jig saw includes a handle and a relatively small, thin blade oriented to be used comfortably on horizontal surfaces. A recip saw usually has a larger blade and blade-mounting assembly resembling that of a jig saw, but includes a handle oriented to allow the saw to be used comfortably on vertical surfaces. Well known reciprocating saws are sold under the brand names "Sawzall™" by Milwaukee Electric Tool Corporation and "Tiger Saw™" by Porter-Cable Corporation. A reciprocating saw blade is a saw blade adapted for use in a reciprocating saw, such as a recip saw or a jig saw, where the inner end of the blade engages the chuck of a reciprocating saw, and the outer end is a free end of the blade that does not engage the chuck during use.

Standardized or universal chucks and corresponding tangs allow reciprocating saw users to easily change reciprocating saw blades due to blade wear or to customize the saw blade to suit a particular cutting application. Different cutting applications are defined by the type of materials to be cut, such as thin metals, thick metals, hard metals, soft metals, wood, wood and nails, dry wall, tile, etc. In the prior art, different types of recip blades are designed for different cutting applications. For example, blades with finer teeth may be used for cutting through metal, while abrasive blades may be used for cutting through tile. Similarly, long, general-purpose blades may be used for cutting through a variety of materials, from drywall to tree-limbs, lumber or even nails.

Because typical prior art reciprocating saw blades include only a single cutting edge, fundamental problems persist. The single cutting edge can wear out more quickly than desired, thereby requiring disposal of the entire blade. The cost of manufacture and materials may be unnecessarily high due to the inclusion of only a single such cutting edge. This problem can be acute in connection with relatively expensive blades, and/or blades made with relatively expensive cutting edge materials, such as reciprocating saw blades with carbide and/or diamond grit cutting edges. A single cutting edge also presents a practical problem in that the reciprocating saw blade must be changed with each use depending on the cutting application.

Various attempts have been made to solve these problems. The most common being saw blade tooth forms or tooth geometries with patterns that are considered to be suitable for general or multiple purpose cutting applications. Another attempt involves the use of multiple saw blades for differing cutting applications. These solutions have shortcomings, however.

A general purpose blade designed to cut in multiple different applications is generally ineffective and inefficient and makes more sacrifices in performance than otherwise desired for any one cutting application. For example, a thin metal application requires a different blade tooth set up than a thick metal application, and a thick metal application requires a different blade tooth set up than a wood only or wood and nail application. Thus, the requirements are different depending on the respective cutting application, and may differ drastically between thick and thin metal or a wood only or wood and nail applications.

A single purpose or application-specific recip blade relies on its tang angle for effective cutting. The tang angle is the angle at which the blade cutting edge is oriented relative to the direction of or an axis of reciprocation of the blade. In prior art dual cutting edge recip blades with individual-application cutting edges, a lack of a tang angle yields poor performance. This poor performance occurs because although one cutting edge might have an effective tang angle for a respective cutting application, the other cutting edge typically includes a negative tang angle that makes that edge ineffective and/or inefficient. Thus, in such prior art dual cutting edge recip blades, there is a superior performance cutting edge and a poor-performance cutting edge. In at least some prior art dual cutting edge recip blades, the blade does not include any tang angle, resulting in dual cutting edges with poor performance.

It is an object of the present invention to overcome one or more of the above-described drawbacks and/or disadvantages of the prior art.

### SUMMARY OF THE INVENTION

In accordance with a first aspect, the present invention is directed to a reciprocating saw blade for use in a reciprocating saw having only one chuck that releasably engages one end of the reciprocating saw blade and thereby defines a free end at the other end of the saw blade that is driven by the reciprocating saw in a reciprocating motion. The reciprocating saw blade comprises a blade body defining a first end and a second end. A first cutting edge is located on one side of the blade body, and a second cutting edge is located on an opposite side of the blade body. The first cutting edge defines a first cutting direction and is angled inwardly toward the first cutting direction and away from an elongated axis of the blade or an elongated edge of the tang at a first acute cutting angle. The second cutting edge defines a second cutting direction that is substantially opposite the first cutting direction, and is angled inwardly toward the second cutting direction and away from an elongated axis of the blade or an elongated edge of the tang at a second acute cutting angle.

In some embodiments of the present invention, a first tang is located at one end of the blade body and defines the first acute cutting angle of the first cutting edge, and a second tang is located at another end of the blade body and defines the second acute cutting angle of the second cutting edge. The first and second tangs are alternately and releasably engageable by the chuck of the reciprocating saw.

In other embodiments of the present invention, a tang is located at one end of the blade body. The tang defines a first elongated tang edge and is releasably engageable by the chuck of the reciprocating saw. The first cutting edge is defined by a plurality of first groups of cutting elements. Each first group of cutting elements is inclined inwardly at the first acute cutting angle toward the first cutting direction relative to a first elongated tang edge. In some such embodiments, the tang further defines a second elongated tang edge. The second cutting edge is defined by a plurality of second groups of cutting elements. Each second group of cutting elements is inclined inwardly at the second acute cutting angle toward the second cutting direction relative to a second elongated tang edge.

In some embodiments of the present invention, the first acute cutting angles define an effective cutting angle for a first type of cutting edge and/or for cutting a first type of work piece, and the second acute cutting angle defines an effective cutting angle for a second type of cutting edge and/or for cutting a second type of work piece. In some embodiments of the present invention, each of the first and second acute cutting angles are within the range of about 1° to about 10°, are preferably within the range of about 3° to about 8°, and are even more preferably within the range of about 5° to about 7°.

In some embodiments of the present invention, at least one of the first and second cutting edges includes a plurality of cutting teeth. The first cutting edge defines at least one of a first tooth form, pitch, tooth height and tooth set, and the second cutting edge defines at least one of a second tooth form, pitch, tooth height and tooth set that is different than first tooth form, pitch, tooth height or tooth set. In other embodiments of the present invention, at least one of the first and second cutting edges is defined by an abrasive surface or grit.

In some embodiments of the present invention, the first cutting edge includes a plurality of first groups of teeth. Each first group of teeth defines a respective first acute cutting angle between a plane extending between tips of teeth of the respective first group of teeth and an elongated edge of the tang or an elongated axis of the blade body. In some such embodiments, the plurality of first acute cutting angles are approximately the same. In some such embodiments, the second cutting edge includes a plurality of second groups of teeth. Each second group of teeth defines a respective second acute cutting angle between a plane extending between tips of teeth of the respective second group of teeth and an elongated edge of the tang or an elongated axis of the blade body. In some such embodiments, the plurality of second acute cutting angles are approximately the same.

In accordance with another aspect, the present invention is directed to a reciprocating saw blade for use in a reciprocating saw having only one chuck that releasably engages one end of the reciprocating saw blade and thereby defines a free end at the other end of the saw blade that is driven by the reciprocating saw in a reciprocating motion. The reciprocating saw blade comprises a blade body defining a first end and a second end. A tang is located on at least one end of the blade body. First means for cutting is located on one side of the blade body and second means for cutting is located on an opposite side of the blade body. The first means defines a first cutting direction and is angled inwardly toward the first cutting direction and away from an elongated axis of the blade or an elongated edge of the tang at a first acute cutting angle. The second means defines a second cutting direction that is substantially opposite the first cutting direction and is angled inwardly toward the second cutting direction and away from an elongated axis of the blade or an elongated edge of the tang at a second acute cutting angle.

In some such embodiments, the recip blade further comprises a first tang located at one end of the blade body for releasable engagement by the chuck of the reciprocating saw and defining the first acute cutting angle of the first means. A second tang is located at another end of the blade body for releasable and alternate engagement by the chuck of the reciprocating saw and defines the second acute cutting angle of the second means.

In other embodiments of the present invention, the tang is located at one end of the blade body for releasable engagement by the chuck of the reciprocating saw. The tang defines an elongated edge that contacts the chuck when engaged thereby. The first means is defined by a plurality of discrete means for cutting. Each discrete means for cutting is oriented at the first acute cutting angle relative to the elongated edge that defines an effective cutting angle for the respective discrete means for cutting. In some such embodiments, the first means is a first cutting edge, the second means is a second cutting edge, and the discrete means for cutting is a plurality of cutting elements.

In accordance with another aspect, the present invention is directed to a method comprising the following steps:

(i) driving a first cutting edge of a reciprocating saw blade with a reciprocating saw in a first direction of reciprocating motion and at a first acute cutting angle with respect to, and angled inwardly toward the first direction of reciprocating motion, and that defines an effective cutting angle for the first cutting edge;

(ii) removing a tang of the reciprocating saw blade from a chuck of the reciprocating saw, flipping the blade, and mounting either the same tang of the reciprocating saw blade, or a different tang of the reciprocating saw blade, in the chuck of the reciprocating saw, and presenting a second cutting edge of the reciprocating saw blade for use that is located on an opposite side of the reciprocating saw blade relative to the first cutting edge; and

(iii) driving the second cutting edge of the reciprocating saw blade with the reciprocating saw in a second direction of reciprocating motion and at a second acute cutting angle with respect to, and angled inwardly toward the second direction of reciprocating motion, and that defines an effective cutting angle for the second cutting edge.

Some embodiments of the present invention further comprise cutting a work piece with the first cutting edge during one of the pull and push strokes of the blade, and cutting the work piece with the second cutting edge during the other of the push and pull strokes of the blade.

One advantage of the present invention is that the reciprocating saw blade can provide all or substantially all the effectiveness of a single edge recip blade plus the longevity and utility of a dual edge blade. Yet another advantage of some embodiments of the present invention is that the second tang allows both cutting edges of the recip blade to define an effective tang angle for respective cutting application(s), to thereby allow superior performance in comparison to prior art dual or single cutting edge recip blades. As a result, a user is able to effectively use two different blades, each optimized for respective cutting application(s), in a single blade strip.

Another advantage of the present invention is when the first cutting edge of the recip blade wears out, the blade may be removed from the chuck, flipped or rotated 180°, with the opposite side of the same tang or the second tang inserted into the chuck, to present a different cutting edge of the same blade. In addition, the recip blade may be flipped or rotated 180° to choose a second cutting edge for a different cutting application without the need to look for and choose a second recip blade for the second cutting application.

As a result, the blades of the present invention can achieve significantly improved wear life in comparison to prior art recip blades. Moreover, the blades of the present invention can provide superior performance for a variety of cutting applications. The blades also can provide more value for a user and a lower cost of manufacture and ship per cutting edge in comparison to prior art single cutting edge recip blades. Yet another advantage is that tasks requiring multiple cutting edges for different cutting applications may be completed faster because a single blade is able to be used for multiple cutting applications.

Other objects and advantages of the present invention, and/or of the currently preferred embodiments thereof, will become more readily apparent in view of the following detailed description of currently preferred embodiments and accompanying drawings.

### BRIEF DESCRIPTION OF THE DRAWINGS

FIG. 1 is a side elevational view of a prior art reciprocating saw blade including dual cutting edges and a tang on one end of the blade, wherein the tang provides an effective tang angle for a first cutting edge and a negative tang angle for the second cutting edge;

FIG. 2 is a side elevational view of one embodiment of a reciprocating saw blade of the present invention, wherein the blade includes a first cutting edge located on one side of the blade, a second cutting edge located on an opposite side of the blade, a first tang located on one end of the blade and defining a first or effective tang angle for the first cutting edge, and a second tang located on the other end of the blade and defining a second or effective tang angle for the second cutting edge of the blade;

FIG. 2A is an enlarged, partial, side elevational view of the recip blade of FIG. 2 illustrating in further detail exemplary cutting teeth of the first cutting edge of the blade;

FIG. 2B is an enlarged, partial, side elevational view of the recip blade of FIG. 2 illustrating in further detail exemplary cutting teeth of the second cutting edge of the blade;

FIG. 3 is a side elevational view of another embodiment of a reciprocating saw blade of the present invention, wherein the blade includes dual cutting edges, each cutting edge includes a plurality of groups of cutting segments or teeth, and each group is angled with respect to the tang or longitudinal axis of the blade to define an effective cutting angle for that group of cutting segments or teeth for a respective cutting application or applications.

FIG. 3A is an enlarged, partial, side elevational view of the reciprocating saw blade of FIG. 3 illustrating in further detail a respective group of teeth on one of the dual cutting edges of the blade and the manner in which the respective group of teeth is angled with respect to the tang or longitudinal axis of the blade.

### DETAILED DESCRIPTION OF CURRENTLY PREFERRED EMBODIMENTS

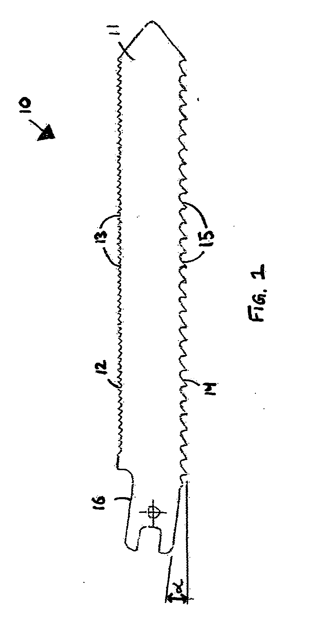

Referring to the drawings and, in particular, FIG. 1, a prior art reciprocating saw blade is shown and generally represented by the reference numeral 10. As indicated above, a reciprocating saw is a hand-held saw that includes a chuck or like mechanism for releasably engaging a saw blade and driving the saw blade in a reciprocating motion. The reciprocating saw causes the saw blade 10 to move in a reciprocating motion in an a series of push and pull strokes, i.e., forward strokes and return strokes. During each stroke, the saw blade 10 moves between a rearmost position and a forward most position to, in turn, apply a cutting action to a work piece. When the reciprocating saw blade 10 is engaged by a reciprocating saw chuck at one end of the blade, the opposite end of the blade defines a free end that is allowed to move into engagement and through a work piece.

The reciprocating saw blade 10 includes a blade body 11, the blade body 11 having a first cutting edge 12 and second cutting edge 14. Each of the cutting edges include a plurality of cutting elements (e.g., teeth) configured for one or more cutting applications. For example, first cutting elements 13 disposed on the first cutting edge 12 may be configured to cut metal, while second cutting elements 15 (e.g., teeth) disposed on the second cutting edge 14 may be configured to cut wood. The reciprocating saw blade 10 further includes a single tang 16, the tang 16 including a tang angle represented by α in FIG. 1.

As may be appreciated from FIG. 1, a common dual cutting edge blade 10 includes a single tang 16 having a tang angle α for improving performance of the first cutting edge 12. However, the second cutting edge 14 performs poorly because, although the first cutting edge 12 has an effective tang angle α for a particular application, the second cutting edge 14 includes a negative tang angle that makes that edge ineffective and/or inefficient. Thus, in such prior art dual cutting edge blades, there is a superior performing cutting edge (e.g., first cutting edge 12) and a poor-performing cutting edge (e.g., second cutting edge 14). In at least some other designs (not shown), the blade 10 does not include any tang angle, resulting in dual cutting edges with poor performance on both edges.

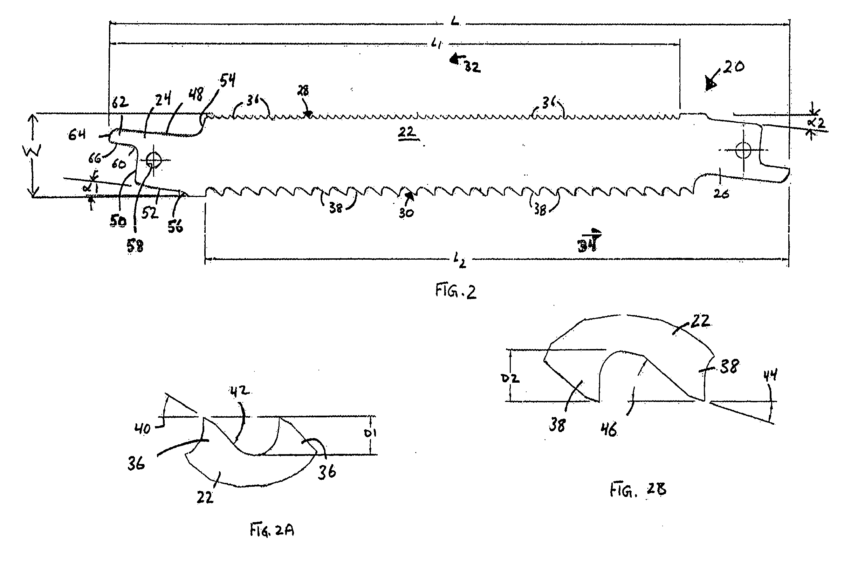

Turning to FIG. 2, a reciprocating saw blade in accordance with one embodiment of the present invention is shown and generally represented by the reference numeral 20. The reciprocating saw blade 20 includes a blade body 22 defining a first end including a first tang 24, and a second end including a second tang 26. As can be seen, the first end including the first tang 24 is located at one end of the blade body 22 and is engageable with the chuck of a reciprocating saw (not shown). Likewise, the second end including the second tang 26 is located at the opposite end of the blade body 22 and is alternatively engageable with the chuck of a reciprocating saw. The design of the first tang 24 and the second tang 26 make the reciprocating saw blade 20 compatible with recip saws, and therefore the blade 20 is a recip blade. The blade 20 further includes a first cutting edge 28 extending along one side of the blade body 22 between the first end and the second end of the blade 20, and a second cutting edge 30 located on the opposite side of the blade body relative to the cutting edge 28. In the illustrated embodiment, and as described further below, the cutting edges 28 and 30 are substantially uniform cutting edges that extend from approximately one end of the blade body 22 to the opposite end of the blade body. The first cutting edge 28 defines a first cutting direction indicated by the first arrow 32, and the second cutting edge 30 defines a second cutting direction indicated by the second arrow 34. In the illustrated embodiment, the first cutting direction 32 is opposite or substantially opposite the second cutting direction 34. In the illustrated embodiment, the first cutting edge 28 is substantially parallel to the second cutting edge 30. However, as may be recognized by those of ordinary skill in the pertinent art based on the teachings herein, the orientation, shape and/or configuration of the cutting edges 28, 30 may vary as needed to accomplish different cutting applications or otherwise as desired.

The first tang 24 is engageable with the chuck of a reciprocating saw for releasably securing the first end to the reciprocating saw and forming with the second end and second tang 26 a free end of the saw blade 20 that is drivable in a reciprocating motion by the reciprocating saw in the first cutting direction 32. Similarly, the second tang 26 is alternatively engageable with the chuck of a reciprocating saw for releasably securing the second end to the reciprocating saw and forming with the first end and first tang 24 a free end of the saw blade 20 drivable in a reciprocating motion by the reciprocating saw in the second cutting direction 34. Accordingly, only one end of the reciprocating saw blade 20 is engaged with the chuck of a reciprocating saw at any one time, and the other end of the reciprocating saw blade defines a free end that is driven by the reciprocating saw in a reciprocating motion into engagement and through a work piece. In order to effectively operate in a reciprocating saw, and in contrast to, for example, a scroll saw blade, the body 22 of the reciprocating saw blade 20 must be sufficiently rigid to allow the blade 20 to be engaged by the chuck of a reciprocating saw at only one end of the blade, while the opposite free end of the blade is driven in a reciprocating motion into engagement with and through a work piece. In the illustrated embodiment, the blade body 22 is formed of metal, such as carbon steel or spring steel. As shown in FIG. 2, the blade 20 defines an overall length L extending from the end of the first tang 24 to the end of the second tang 26, the first cutting edge defines a length L1 extending between the end of the first tang 24 and the opposite end of the first cutting edge 28, the second cutting edge defines a length L2 extending between the end of the second tang 26 and the opposite end of the second cutting edge 30, and the blade body 22 defines a width W. The length "L" is within the range of about 4 inches to about 12 inches and the width "W" within the range of about 1/2 of an inch to about 1-1/2 inches. The blade body 22 defines a thickness "T" (not shown) that is within the range of about 25/1000 of an inch to about 75/1000 of an inch. As may be recognized by those of ordinary skill in the pertinent art based on the teachings herein, these dimensions are only exemplary, and may be changed as desired or otherwise required.

One advantage of the illustrated embodiment of the present invention is that when one of the cutting edges (28 or 30) becomes worn out, or otherwise if dictated by a particular cutting application, the blade may be flipped within the reciprocating saw to present the other cutting edge (28 or 30) for use. For example, when the reciprocating saw blade 20 is releasably secured in a chuck by the first tang 24, the first cutting edge 28 typically will become damaged or worn with time or may not be the right cutting edge or otherwise desired for a particular cutting application. Accordingly, once the first cutting edge 28 becomes worn or damaged, or if not the right cutting edge or otherwise desired for a particular cutting application, the first tang 24 may be disengaged from the chuck of the reciprocating saw, the reciprocating saw blade 20 may be flipped or rotated 180°, and the second tang 26 may be inserted into and engaged with the chuck to, in turn, present the second cutting edge 30 for use. As a result, the wear life of the blades of the present invention can be significantly extended in comparison to prior art reciprocating saw blades having only one cutting edge. This aspect of the present invention is particularly advantageous when implemented in connection with reciprocating saw blades having relatively costly cutting edges, such as diamond grit or other carbide grit cutting edges. In addition, one recip blade may be used for more and different cutting applications than prior art single cutting edge recip blades.

As shown in FIG. 2, the first tang 24 defines a first tang angle α1 that corresponds to the first cutting edge 28 and defines an effective tang or cutting angle for that cutting edge. The second tang 26 defines a second tang or cutting angle α2 that corresponds to the second cutting edge 30 and defines an effective tang or cutting angle for the second cutting edge. An effective tang angle enables the cutting edge to effectively cut work pieces in respective cutting application(s). Typically, an effective tang or cutting angle orients the cutting edge and/or tang so that the cutting edge is angled inwardly at an acute angle relative to an elongated or longitudinal axis of the blade, or relative to an elongated or longitudinal edge of the tang, and generally toward the cutting direction of the cutting edge. As a result, the effective tang or cutting angle facilitates maintaining the rake faces or cutting edges of the teeth fully engaged with the work piece during and throughout the cutting stroke. The acute tang or cutting angle imparts an effective positive rake angle on the teeth even if the teeth define a 0° or substantially 0° rake angle. As may be recognized by those skilled in the pertinent art based on the teachings herein, each tang or cutting angle is tuned to the respective cutting edge to optimize the cutting performance of that cutting edge for the respective cutting application or applications of that cutting edge. Therefore, the first tang angle α1 may be the substantially same as, greater than, or less than, the second tang angle α2. Preferably, the first and second tang angles α1 and α2, respectively, are within the range of about 1° to about 10°, are more preferably within the range of about 3° to about 8°, and in some embodiments, are more preferably within the range of about 5° to about 7°. In one currently preferred embodiment, each tang angle is about 6° ± 1/2°.

Cutting elements are disposed on each of the first and second cutting edges 28, 30. As shown in FIG. 2, the first cutting edge 28 is defined by a plurality of first cutting elements or teeth 36, 36 and the second cutting edge 30 is defined by a plurality of second cutting elements or teeth 38, 38. As may be recognized by those of ordinary skill in the pertinent art based on the teachings herein, the first and second cutting elements 36, 38 are configured for respective cutting applications based on, for example, the particular tooth geometries or forms (such as by setting the primary, and if applicable, secondary and/or tertiary, clearance angles), the pitch or number of teeth-per-inch ("tpi"), and/or the teeth heights or height differentials and/or sets. In the illustrated embodiment, the first cutting edge 28 is configured for metal cutting applications and defines a pitch of about 14 tpi, and the second cutting edge 30 is configured for nail and wood applications and defines a 6 tpi pitch. As shown typically in FIG. 2A, the first metal cutting teeth 36, 36 define a primary clearance angle 40, a secondary clearance angle 42, and a gullet depth D1. Each clearance angle is an acute angle, and the primary clearance angle is less than the secondary clearance angle. Preferably, the primary clearance angle is within the range of about 25° to about 40°, and the secondary clearance angle is within the range of about 40° to about 50°. In the illustrated embodiment, the primary clearance angle 40 is about 30°, the secondary clearance angle 42 is about 45°, and the gullet depth D1 is about 0.034 inch. As shown typically in FIG. 2B, the second nail and wood cutting teeth 38, 38 define a primary clearance angle 44, a secondary clearance angle 46, and a gullet depth D2. Each clearance angle is an acute angle, and the primary clearance angle is less than the secondary clearance angle. Preferably, the primary clearance angle is within the range of about 15° to about 25°, and the secondary clearance angle is within the range of about 35° to about 45°. In the illustrated embodiment, the primary clearance angle 44 is about 17°, the secondary clearance angle 46 is about 40°, and the gullet depth D2 is about 0.078 inch. As may be recognized by those of ordinary skill in the pertinent art based on the teachings herein, these particular tooth forms, including the particular angles and dimensions, are only exemplary, and may take any of numerous different tooth forms, including any of numerous different clearance angles and other dimensions that re currently known, or that later become known.

The first and second cutting edges 28 and 30, respectively, may be the same or may differ in any of numerous ways, including without limitation, by having teeth on one edge and an abrasive surface or grit on the other edge, or by having different tooth forms, pitches, heights, height differentials, sets, etc., in order to be effective for any of numerous different cutting applications. Table A below illustrates exemplary combinations of cutting applications of the first and second cutting edges 28 and 30, respectively.

| **Table A** | |
|---|---|
| **First Cutting Edge (28)** | **Second Cutting Edge (30)** |
| Metal cutting | General purpose cutting |
| Thin metal cutting | Thick metal cutting |
| General purpose cutting | Wood cutting |
| Wood cutting | Wood cutting |
| Wood cutting | Demolition cutting |
| General purpose cutting | Demolition cutting |
| Demolition Cutting | Metal Cutting |
| Drywall, plaster, plastic cutting | Wood cutting |
| Drywall, laster, plastic cutting | Demolition cutting |
| Drywall, plaster, plastic cutting | Metal Cutting |
| Thin metal cutting | Thin metal cutting |
| Grit edge | Thick metal cutting |
| Grit edge | Wood cutting |
| Grit edge | General purpose cutting |
| Grit edge | Demolition cutting |
| Grit edge | Grit edge |
| Grit edge | Drywall, plaster, plastic cutting |

One of ordinary skill in the art will understand that the different applications described Table A or as may be otherwise desired may require differently configured cutting edges, such as teeth verses grit, or different configured teeth, tooth forms, pitches, heights, height differentials, sets and/or tooth types, such as bi-metal, carbide tipped or carbon steel teeth. In addition, as may be recognized by those of ordinary skill in the pertinent art based on the teachings herein, the first cutting edge 28, the second cutting edge 30 and the respective cutting elements 36, 38 disposed thereon are only exemplary, and may take the form of any of numerous different types of cutting elements that are currently known, or that later become known, including without limitation, different types of diamond, carbide or other abrasive or grit cutting edges, carbide tipped cutting edges, bi-metal cutting edges or steel cutting edges. For example, currently preferred embodiments of metal cutting or thin metal cutting edges define a pitch within the range of about 24 tpi up to about 18 tpi, and include variable pitches within that range; thick metal cutting edges preferably define a pitch of about 14 tpi; general purpose cutting edges preferably define a pitch within the range of about 14 tpi to about 8 tpi, and include variable pitches within that range; wood cutting edges preferably define a pitch within the range of about 6 tpi to about 3 tpi, and may define different tooth forms, such as for cutting clean wood as opposed to nail embedded wood; and demolition cutting edges preferably define pitches within the range of about 6 tpi to about 3 tpi, and preferably define tooth forms that can cut both metal and wood.

It will be understood that the recip blades of the present invention may include any of the combinations described in Table A, or any of numerous other combinations that are currently known or that later become known. In addition, the first cutting edge 28 may be configured for any of the applications described for the second cutting edge 30 in Table A, and vice versa. It will be also understood that in some embodiments, the two cutting edges 28, 30 are configured for the same application. In such embodiments, the consumer is afforded a single blade 20 having dual cutting edges for the same application leading to an overall reduction in cost in comparison to purchasing two separate blades. Accordingly, the cutting edges of the recip blades of the present invention may take any of numerous different forms that are currently known, or that later become known, for performing the desired cutting applications, such as those summarized above. The recip blades of the present invention therefore may take any of numerous different forms that are currently known, or that later become known, for performing the desired cutting applications, such as those summarized above.

As demonstrated by the test results summarized in Tables B and C below, recip blades of the present invention have provided unexpectedly improved results. First, it has been unexpectedly discovered that when a double-sided recip blade of the type shown in FIG. 2 has unused (or fresh) cutting elements on the non-working or second cutting edge, the working or first cutting edge exhibits significantly improved performance over the same type of cutting edge on a single cutting edge recip blade. Second, in view of the foregoing results, one would reasonably expect the second cutting edge (i.e., the edge used second or after the other cutting edge is worn) to exhibit inferior performance as compared to the same type of cutting edge on a single cutting edge recip blade. However, the second cutting edge of the blades of the present invention used after the first cutting edge also exhibited improved performance over the same type of cutting edge on a fresh single cutting edge recip blade.

| **Table B** | | |
|---|---|---|
| **Double Sided Recip (18 tpi Side of 10 tpi/18 tpi Recip) vs. Single Sided Recip (18 tpi)** | | |
| | **Group 1** | **Group 2** |
| | **Double Sided Recip -18 tpi Side** | **Single Sided Recip -18 tpi** |
| Length: | 8" | 8" |
| Width: | 3/4" | 3/4" |
| Thick: | .035" | .035" |
| TPI: | 18T | 18T |

| **Number of Cuts** | | |
|---|---|---|
| Blade 1 | 168 | 127 |
| Blade 2 | 184 | 146 |
| Blade 3 | 182 | 143 |
| Blade 4 | 183 | 145 |
| Blade 5 | 181 | 133 |
| Blade 6 | 149 | 160 |
| **Average:** | **174.5** | **142.3** |
| **Std Dev** | **13.8** | **11.4** |
| **% Std Dev** | **8%** | **8%** |

| **Cutting Time, First Cut (Seconds)** | | |
|---|---|---|
| Blade 1 | 4.4 | 4.4 |
| Blade 2 | 4.1 | 4.0 |
| Blade 3 | 4.5 | 4.4 |
| Blade 4 | 4.3 | 4.4 |
| Blade 5 | 3.6 | 4.3 |
| Blade 6 | 3.9 | 3.9 |
| **Average:** | 4.1 | 4.2 |

| **Table C** | | |
|---|---|---|
| **Double Sided Recip (10 tpi Side of 10 tpi/18 tpi Recip) vs. Single Sided Recip (10 tpi)** | | |
| | **Group 1** | **Group 2** |
| | **Double Sided Recip -10 tpi Side** | **Single Sided Recip - 10 tpi** |
| Length: | 8" | 8" |
| Width: | 3/4" | 3/4" |
| Thick: | .035" | .035" |
| TPI: | 10T | 10T |

| **Number of Cuts** | | |
|---|---|---|
| Blade 1 | 340 | 460 |
| Blade 2 | 278 | 315 |
| Blade 3 | 610 | 407 |
| Blade 4 | 390 | 223 |
| Blade 5 | 444 | 281 |
| Blade 6 | 231 | 341 |
| **Average:** | **382.2** | **337.8** |
| **Std Dev** | **135.1** | **85.6** |
| **% Std Dev** | **35%** | **25%** |

| **Cutting Time, First Cut (Seconds)** | | |
|---|---|---|
| Blade 1 | 9.9 | 10.4 |
| Blade 2 | 8.3 | 8.8 |
| Blade 3 | 8.5 | 10.8 |
| Blade 4 | 10.0 | 10.5 |
| Blade 5 | 10.7 | 9.1 |
| Blade 6 | 10.0 | 11.1 |
| **Average:** | **9.6** | **10.1** |

As indicated in Tables B and C above, the tested blades were of the type shown in FIG. 2, where one cutting edge defined an 18 tpi pitch, and the other cutting edge defined a 10 tip pitch. The 18 tpi cutting edges were tested by cutting 1-1/2 inch diameter steel electromechanical tubing ("EMT") at a cutting speed of about 1500 spm, and the 10 tpi cutting edges were tested by cutting 1 inch diameter steel black pipe also at a cutting speed of about 1500 spm. All cutting edges were tested for both blade life or "Number of Cuts", and cutting speed or "Cutting Time, First Cut". The test parameters for the 18 tpi cutting edge were as follows: (i) blade life (or failure threshold) was set at "20 seconds/45 seconds", i.e., each tested cutting edge was deemed to have failed (or been fully worn) when the average time per cut of three consecutive cuts was 20 seconds or greater, or when a single cut was 45 seconds or greater; and (ii) the cutting time was the measured time for the respective cutting edge to first cut through a work piece, i.e., achieve full separation of the work piece along the line of cut. Similarly, the test parameters for the 10 tpi cutting edge were as follows: (i) blade life (or failure threshold) was set at "90 seconds/120 seconds", i.e., each tested cutting edge was deemed to have failed (or been fully worn) when the average time per cut of three consecutive cuts was 90 seconds or greater, or when a single cut was 120 seconds or greater; and (ii) the cutting time was the measured time for the respective cutting edge to first cut through a work piece, i.e., achieve full separation of the work piece along the line of cut.

As can been seen, the 18 tpi cutting edges of the double-sided recip blades of the present invention achieved on average 174.5 cuts per cutting edge, whereas as the same type of cutting edge on the single sided recip blades achieved on average 142.3 cuts. Accordingly, in this test, the cutting edges of the recip blades of the present invention achieved on average 22.6% improved blade life. Similarly, the 10 tpi cutting edges of the double-sided recip blades of the present invention (which were tested after the corresponding 18 tpi edges were used and worn) achieved on average 382.2 cuts per cutting edge, whereas the same type of cutting edge on the single sided recip blades achieved on average 337.8 cuts. Accordingly, in this test, the cutting edges of the recip blades of the present invention achieved on average 13.1% improved blade life. For both edges of the double-edge recip blades of the invention, the cutting time was about the same as or faster than the cutting time for the same type of cutting edge on a single sided recip blade.

As shown in FIG. 2, each of the first and second tangs 24, 26 define a first front edge 48, a first side edge 50, and a first back edge 52. Each first front edge 48 is laterally offset a predefined distance from the respective cutting edge 28 or 30 by a necking 54. Each necking 54 defines an inner end of the respective cutting edge 28 or 30, and in the illustrated embodiment, is curvilinear. The degree of offset formed by the necking 54 may vary depending on any of a variety of factors known to those of ordinary skill in the pertinent art. Each first front edge 48 and first back edge 52 is substantially straight or linear, and is substantially perpendicular to the respective first side edge 50. Each first back edge 52 is preferably offset a predetermined distance from the non-working edge of the respective tang by a necking 56. Each first back edge 52 is substantially straight or linear and also is substantially parallel to the respective first front edge 48. Each tang 24, 26 further defines a tang aperture 58 extending through the tang and a tang chamfer 60. One purpose of the tang aperture 58 is to increase the strength and otherwise enhance the safety associated with clamping or connecting the blade 20 to a particular clamping device (e.g., a chuck) by use of a connecting element (e.g., a stud or pin) through the tang aperture 58 whenever the configuration or construction of the clamping device permits. Thus, the tang aperture 58 may be sized, shaped, positioned and/or configured to operatively accommodate any of a variety of different chucks or like connecting elements. The tang chamfer 60 is preferably substantially curvilinear, as shown. One purpose of the tang chamfer 60 is to facilitate the effective and efficient insertion of the tang into a variety of different chucks or other clamping devices. As may be recognized by those of ordinary skill in the pertinent art based on the teachings herein, the above-described features of the tangs are only exemplary, and the tangs of the blades of the present invention may take any of numerous different tang shapes and/or configurations that are currently known or that later become known, including without limitation tangs that are angled relative to cutting surface, tangs including the same or similar features as described above, that have certain above-described features omitted, and/or features in addition to those described above.

Each tang 24, 26 further includes a tang stem 62 defining a reduced width portion of the tang that extends rearwardly on the respective tang for receipt within the chuck or like tang-engaging device of a reciprocating saw. Each tang stem 62 defines a second side edge 64, and a second back edge 66. The front edge of each tang stem is defined by the elongated or longitudinal front edge of the 48 of the tang. Each second side edge 64 is substantially perpendicular to the respective front edge 48 or back edge 52. Each second side edge 64 is substantially straight or linear. As may be recognized by those of ordinary skill in the pertinent art based on the teachings herein, these features of the tang stem are only exemplary, and the tang stems of the blades of the present invention may take any of numerous different tang stem shapes and/or configurations that are currently known or that later become known. For example, the tangs and/or tang stems may take the form of any of the tangs or tapered tang stems disclosed in co-pending U.S. Patent Application Serial No. 11/106,907, filed April 15, 2005, entitled "Reciprocating Saw Blade With Tapered Tang Stem", now U.S. Patent No. 7,600,458, which is assigned to the Assignee of the present invention, and is hereby expressly incorporated by reference in its entirety as part of the present disclosure.

As described above, the tangs of the reciprocating blades are sized and shaped to allow the blades to be engaged by a chuck. In alternative embodiments of the present invention, the specific design of the tang or tangs may conform to a standard or conventional design to be compatible with widely used reciprocating saws and chucks, such as a one-half inch universal tang. In other alternative embodiments, the tangs are shaped and dimensioned to be compatible with (i.e., capable of being releasably engaged by) a unique or specific chuck of a reciprocating saw, such as a quick change chuck. In other alternative embodiments, the recip blades include two tangs that are different from each other to, for example, fit different types of chucks or different types of reciprocating saws. Such alternative embodiments are contemplated and include all tang/chuck designs currently known or not yet known in the art.

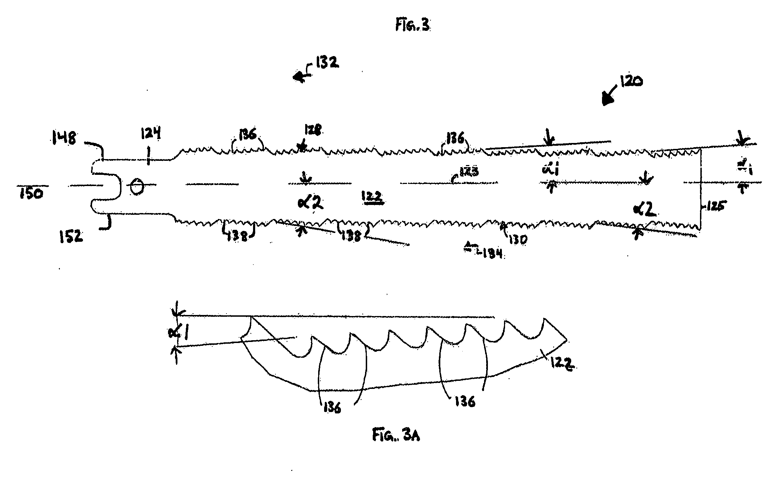

In FIGS. 3 and 3A, another double-sided recip blade embodying the present invention is indicated generally the by reference numeral 120. The recip blade 120 is similar to the recip blade 20 described above with reference to FIGS. 2, 2A and 2B, and therefore like reference numerals preceded by the numeral "1" are used to indicate like elements. The recip blade 120 includes a single tang 124 located at one end of the blade body 122 that defines elongated tang edges 148 and 152 located on opposite sides of the tang relative to each other and that are configured to be releasably engaged by the chuck of a reciprocating saw. In the illustrated embodiment of FIGS. 3 and 3A, the reciprocating saw blade 120 includes only one tang 124 at one end of the blade 120, and the other end of the blade 125 defines a free end without any tang thereon that is not engageable by a chuck of a reciprocating saw.

The first cutting edge 128 is defined by a plurality of first discrete cutting segments or groups of cutting elements 136, 136 extending longitudinally or axially along the first cutting edge, and the second cutting edge 130 is defined by a plurality of second discrete cutting segments or groups of cutting elements 138, 138 extending longitudinally or axially along the second cutting edge. As shown typically in FIG. 3A, each of the first and second groups of cutting segments or cutting elements 136, 136 and 138, 138, respectively, is oriented at a respective acute cutting angle α 1 relative to either elongated tang edge 148 or 152 (or the longitudinal axis of the blade body 122, or the cutting direction, direction of reciprocation, or an axis of the path of reciprocation of the blade) that defines an effective cutting angle for the respective cutting segment or group of cutting elements 136, 136 or 138, 138.

In the illustrated embodiment, the tang 124 defines a substantially zero degree tang angle. Accordingly, the elongated edges 148, 152 of the tang 124 are substantially parallel to the elongated or longitudinal axis 123 of the blade body 122. In the illustrated embodiment, the first cutting edge 128 includes a plurality of first groups of teeth 136, 136. As shown in FIG. 3A, each first group of teeth 136, 136 defines a respective first cutting angle α 1 between a plane extending between tips of teeth of the respective first group of teeth (such as between the tips of any unset teeth) and an elongated edge 148 or 152 of the tang, or the elongated axis 123 of the blade body 122, or a line extending substantially parallel to any of the foregoing, as shown typically in FIGS. 3 and 3A. In the illustrated embodiment, the plurality of first cutting angles α 1 are approximately the same. However, as may be recognized by those of ordinary skill in the pertinent art, the first cutting angles α 1 may vary from group to group or otherwise may vary along the respective cutting edge.

The second cutting edge 130 includes a plurality of second groups of teeth 138, 138. Each second group of teeth 138, 138 defines a respective second cutting angle α 2 between a plane extending between tips of the teeth 138, 138 of the respective second group of teeth and an elongated edge 148 or 152 of the tang 124, the elongated axis 123 of the blade body 122, or a line extending parallel or substantially parallel to any of the foregoing. In some such embodiments, the plurality of second cutting angles α 2 are approximately the same. However, as may be recognized by those of ordinary skill in the pertinent art based on the teachings herein, the second cutting angles α 1 may vary from group to group or otherwise may vary along the respective cutting edge. In addition, the first and second cutting angles α 1 and α 2 may be the same or different, and are set as desired in order to provide an effective cutting angle for a particular application and based on the configuration of the respective cutting segment or group of cutting elements. In addition, the cutting segments or cutting elements may take the form of any of numerous different cutting segments or cutting elements that are currently known, or that later become known, such as discrete cutting segments defined by an abrasive edge, such as a grit edge, including without limitation a carbide or diamond grit edge, discrete cutting segments defined by groups of cutting teeth, and/or any combination of the foregoing. For example, in alternative embodiments of the invention, at least one cutting segment includes a plurality of cutting elements thereon defined by a plurality of cutting teeth, and at least one other cutting segment includes a plurality of cutting elements thereon defined by an abrasive surface, such as grit, and including without limitation carbide or diamond grit.

The operational steps of the saw blades of the present invention including the following:

(i) Driving a first cutting edge 28, 128 of the recip blade 20, 120 in a reciprocating motion with a reciprocating saw at a first cutting angle with respect to an axis of the reciprocating motion (such as defined by the first effective tang angle α 1 illustrated in FIG. 2, or as defined by the first effective cutting angle α 1 illustrated in FIG. 3) that defines an effective cutting angle for the first cutting edge;

(ii) removing the tang 24, 124 of the reciprocating saw blade 20, 120 from the chuck of the reciprocating saw, flipping the blade 20, 120, and mounting either the same tang 124 of the reciprocating saw blade, or a different or second tang 126 of the reciprocating saw blade, in a chuck of a reciprocating saw, and presenting a second cutting edge 30, 130 of the reciprocating saw blade 20, 120 for use that is located on an opposite side of the reciprocating saw blade relative to the first cutting edge 28, 128; and

(iii) driving the second cutting edge 30, 130 of the reciprocating saw blade 20, 120 in a reciprocating motion with a reciprocating saw at a second cutting angle (such as defined by the second effective tang angle α 2 illustrated in FIG. 2, or as defined by the second effective cutting angle α 2 illustrated in FIG. 3) with respect to an axis of the reciprocating motion that defines an effective cutting angle for the second cutting edge 30, 130.

The operational steps preferably further comprise cutting the work piece with the first cutting edge 28, 128 during the pull or push stroke of the blade 20, 120, and cutting the work piece with the second cutting edge 30, 130 during the other of the pull or push stroke of the blade. As indicated above, this aspect is believed to give rise to unexpectedly improved performance with use of the recip blades of the present invention.

As may be recognized by those of ordinary skill in the pertinent art based on the teachings herein, numerous changes and modifications can be made to the above-described and other embodiments of the present invention without departing from the scope of the invention as defined in the appended claims. For example, the recip blades may include one or two tangs. One tang is used to drive a first cutting edge of the blade and defines an effective tang angle for that cutting edge. The same tang or another tang is used to drive the second cutting edge of the blade but does not defme an effective tang angle for the second cutting edge. Rather, the second cutting edge includes a plurality of cutting segments, such as abrasive or grit cutting segments, or a plurality of groups of cutting teeth, wherein each such cutting segment or group of cutting teeth is oriented at an acute cutting angle with respect to the respective tang or elongated axis of the blade to effectively cut a work piece with such cutting segment or group of cutting teeth. In addition, many of the features of the saw blades described above are only exemplary, and may be changed as desired, or otherwise as required to meet the requirements of a particular application. For example, in some embodiments, the cutting edge may be defined by cutting teeth, such as carbide tipped, bi-metal, or traditional carbon steel teeth. In addition, the saw blades of the present invention may be coated with any of numerous different coatings that are currently known or that later become known, such as a titanium nitride coating (TiN), or an aluminum titanium nitride coating (AlTiN). Accordingly, this detailed description of the currently preferred embodiments is to be taken in an illustrative, as opposed to a limiting sense.

## Claims

1. A reciprocating saw blade for use in a reciprocating saw having only one chuck that releasably engages one end of the reciprocating saw blade and thereby defines a free end at the other end of the saw blade that is driven by the reciprocating saw in a reciprocating motion, the reciprocating saw blade comprising:
a blade body defining a first end and a second end;
a tang located on at least one end of the blade body;
a first cutting edge located on one side of the blade body and a second cutting edge located on an opposite side of the blade body, wherein the first cutting edge defines a first cutting direction and is angled inwardly toward the first cutting direction and away from an elongated axis of the blade or an elongated edge of the tang at a first acute cutting angle;
**characterized in that**
the second cutting edge defines a second cutting direction that is substantially opposite the first cutting direction and is angled inwardly toward the second cutting direction and away from the elongated axis of the blade or an elongated edge of the tang at a second acute cutting angle.

2. A reciprocating saw blade as defined in claim 1, wherein the blade includes a first tang located at one end of the blade body defining the first acute cutting angle of the first cutting edge, and a second tang located at another end of the blade body and defining the second acute cutting angle of the second cutting edge, wherein the first and second tangs are alternately and releasably engageable by the chuck of the reciprocating saw.

3. A reciprocating saw blade as defined in claim 1, wherein the tang defines the elongated edge of the tang as a first elongated tang edge and is releasably engageable by the chuck of the reciprocating saw, the first cutting edge is defined by a plurality of first cutting segments or first groups of cutting elements, preferably, defined by cutting teeth and/or at least one of an abrasive surface or grit, each first group of cutting elements is inclined inwardly at the first acute cutting angle toward the first cutting direction relative to a first elongated tang edge particularly the tang further defines a second elongated tang edge, the second cutting edge is defined by a plurality of second cutting segments or second groups of cutting elements, preferably, defined by cutting teeth and/or at least one of an abrasive surface or grit, each second group of cutting elements is inclined inwardly at the second acute cutting angle toward the second cutting direction relative to the second elongated tang edge.

4. A reciprocating saw blade as defined in one of the preceding claims, wherein each acute cutting angle is defined by the angle between (i) an elongated edge of the respective tang, and (ii) a plane extending between the tips of teeth of the respective cutting edge or the respective cutting edge.

5. A reciprocating saw blade as defined in one of the preceding claims, wherein at least one of the first and second cutting edges at least one of (I) includes a plurality of cutting teeth, preferably, the first cutting edge defines at least one of a first tooth form, pitch, tooth height and tooth set, and the second cutting edge defines at least one of a second tooth form, pitch, tooth height and tooth set that is different than first tooth form, pitch, tooth height or tooth set and (II) is defined by an abrasive surface or grit.

6. A reciprocating saw blade as defined in one of the preceding claims, wherein the tang defines a substantially zero degree tang angle, preferably, wherein an elongated edge of the tang is substantially parallel to an elongated axis of the blade body.

7. A reciprocating saw blade as defined in one of the preceding claims, wherein at least one of (I) each first group of cutting teeth defines a respective first acute cutting angle defined between a plane extending between tips of teeth of the respective first group of cutting teeth and the first elongated tang edge or an elongated axis of the blade body, preferably, wherein the respective first acute cutting angles are approximately the same, and (II) each second group of cutting teeth defines a respective second acute cutting angle defined between a plane extending between tips of teeth of the respective second group of cutting teeth and the second elongated tang edge or the elongated axis of the blade body, preferably, wherein the respective second acute cutting angles are approximately the same.

8. A reciprocating saw blade as defined in one of the preceding claims, wherein at least one cutting segment is defined by a plurality of cutting teeth, and at least one other cutting segment is defined by at least one of an abrasive surface and grit, preferably, wherein each first cutting segment is defined by a plurality of cutting teeth, and each second cutting segment is defined by at least one of an abrasive surface and grit.

9. A reciprocating saw blade as defined in claim 7 or 8, wherein the respective first acute cutting angles are approximately equal to each other, and the respective second acute cutting angles are approximately equal to each other, preferably, wherein the respective first acute cutting angles are different than the respective second acute cutting angles.

10. A reciprocating saw blade as defined in any one of the preceding claims, wherein the acute cutting angles are within the range of about 1 ° to about 10°, preferably, within the range of about 3° to about 8°, and more preferably within the range of about 5° to about 7°.

11. A reciprocating saw blade as defined in any one of the preceding claims, wherein the first acute cutting angle defines an effective cutting angle for at least one of the first cutting edge and cutting a first type of work piece, and the second acute cutting angle defines an effective cutting angle for at least one of the second cutting edge and cutting a second type of work piece.

12. A reciprocating saw blade as defined in any one of the preceding claims, wherein the tang extends outwardly in an elongated direction of the blade, and includes a tang body and a tang stem defining a reduced-width portion of the tang that extends outwardly of the tang body in the elongated direction of the blade.

13. A method comprising the following steps:
(i) driving a first cutting edge of a reciprocating saw blade with a reciprocating saw in a first direction of reciprocating motion and at a first acute cutting angle with respect to, and angled inwardly toward the first direction of reciprocating motion, and that defines an effective cutting angle for the first cutting edge;
(ii) removing a tang of the reciprocating saw blade from a chuck of the reciprocating saw, flipping the blade, and mounting either the same tang of the reciprocating saw blade, or a different tang of the reciprocating saw blade, in the chuck of the reciprocating saw, and presenting a second cutting edge of the reciprocating saw blade for use that is located on an opposite side of the reciprocating saw blade relative to the first cutting edge; and
(iii) driving the second cutting edge of the reciprocating saw blade with the reciprocating saw in a second direction of reciprocating motion and at a second acute cutting angle with respect to, and angled inwardly toward the second direction of reciprocating motion, and that defines an effective cutting angle for the second cutting edge.

14. A method as defined in claim 13, further comprising cutting a work piece with the first cutting edge during one of the pull and push strokes of the blade, and cutting the work piece with the second cutting edge during the other of the push and pull strokes of the blade.

15. A method as defined in claim 13 or 14, wherein at least one of the first and second cutting edges includes a plurality of groups of cutting elements, and each group is oriented at a respective acute cutting angle relative to an elongated edge of a tang or an elongated axis of the blade body that defines the first or second acute cutting angle respectively.
